# EUROPÄISCHE PATENTSCHRIFT

(11) **EP 0 775 855 B1**
(45) Veröffentlichungstag und Bekanntmachung des Hinweises auf die Patenterteilung: **28.04.1999**
(21) Anmeldenummer: 96117944.7
(22) Anmeldetag: 08.11.1996
(51) Int. Cl.: F16H 63/30, F16D 49/12

(54) **Hydraulische Servo-Vorrichtung für eine Reibungsbremse in einem Planetenräder-Wechselgetriebe für Kraftfahrzeuge**
Hydraulic servo device for a friction brake in a planetary change-speed gearbox for motor vehicles
Dispositif d'assistance hydraulique pour frein à friction d'une boîte de vitesses pour véhicules automobiles

(30) Priorität: 27.11.1995 DE 19544089
(43) Veröffentlichungstag der Anmeldung: 28.05.1997
(73) Patentinhaber: Ford Global Technologies, Inc., Dearborn, Michigan 48126-2490 (US)
(72) Erfinder: Premiski, Vladimir, 53909 Zuelpich-Buervenich (DE); Lauscher, Friedel, 52372 Kreuzau-Drove (DE); Kirchhoffer, Johann, 50737 Köln (DE); Wollschläger, Gerd, 51491 Overath (DE); Chudada, Radovan, 52072 Aachen (DE)
(74) Vertreter: Messulam, Alec Moses

(56) Entgegenhaltungen:
- DE-A- 3 417 703
- US-A- 2 901 888
- US-A- 4 787 494
- PATENT ABSTRACTS OF JAPAN vol. 008, no. 094 (M-293), 28.April 1984 & JP 59 009342 A (NISSAN JIDOSHA KK), 18.Januar 1984,

## Beschreibung

Die Erfindung bezieht sich auf eine hydraulische Servo-Vorrichtung für eine Reibungsbremse eines Planetenräder-Wechselgetriebes für Kraftfahrzeuge, der im Oberbegriff des Patentanspruches 1 erläuterten Art.

Aus der DE-PS 34 17 703 ist ein Planetenräder-Wechselgetriebe für Kraftfahrzeuge bekannt, bei dem eine hydraulische Servo-Vorrichtung für eine Reibungsbremse vorgesehen ist, um eine Schaltung vom 2. Gang in den 3. Gang in synchroner Weise zu bewerkstelligen.

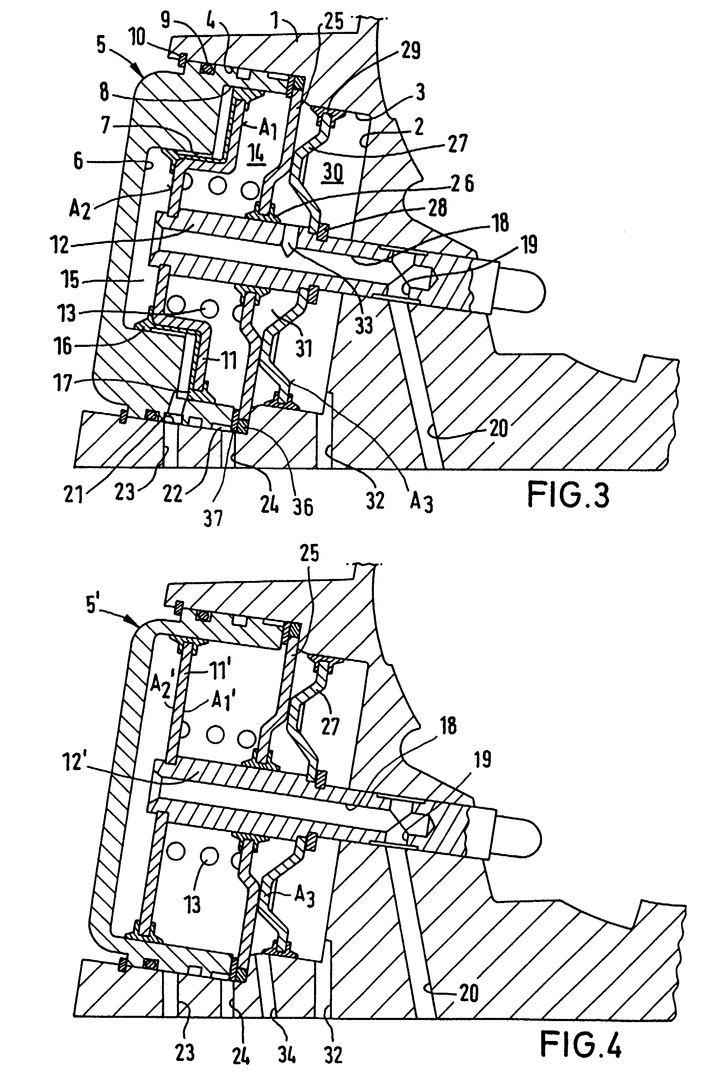

Bei der bekannten Servo-Vorrichtung für die Reibungsbremse (Siehe Fig. 4 der Schrift) wirkt ein Stufen- oder Differentialkolben mit zwei unterschiedlichen Kolbenflächen A₁ und A₂ über eine Kolbenstange und einen Übersetzungshebel auf ein Bremsband ein.

Aus der DE-PS 34 17 784 ist eine hydraulische Steuerventilananordnung für ein Planetenräder-Wechselgetriebe für Kraftfahrzeuge der im Oberbegriff des Patentanspruches 1 erläuterten Art bekannt, bei dem eine Schaltung vom 2. Gang in den 3. Gang durch Anlegen einer zweiten Kupplung CL₂ und gleichzeitigem Lösen einer zweiten Bremse B₂ in synchroner Weise bewirkt wird, indem der in der Anlege-Druckkammer der zweiten Kupplung CL₂ wirkende Druck gleichzeitig der Löse-Druckkammer der zweiten Bremse B₂ zugeführt wird, wodurch diese als Akkumulator wirkt.

Aus der US-PS 2 901 888 ist eine hydraulische Servo-Vorrichtung für eine Reibungsbremse in einem Planetenräder-Wechselgetriebe für Kraftfahrzeuge bekannt, bei der in einem Zylinder mehrere doppelt wirkende Kolben angeordnet sind, um die Reibungsbremse eines Planetenradsatzes zu betätigen, wobei jedoch bei dieser bekannten Anordnung eine Kolbenstange auf einen die Übersetzung erhöhenden Umlenkhebel einwirkt, der dann erst mit seinem kürzeren Hebelarm über ein Gestänge auf das eine Ende eines Bremsbandes einwirkt, dessen anderes Ende in bekannter Weise über einen einstellbaren Festpunkt abgestützt ist.

Die bekannte hydrauliche Servo-Vorrichtung für eine Reibungsbremse in einem Planetenräder-Wechselgetriebe für Kraftfahrzeuge macht somit einen zusätzlichen platzraubenden Aufwand für die Umlenkhebelanordnung erforderlich.

Aus der US-PS 4 787 494 ist eine hydrauliche Servo-Vorrichtung für eine Reibungsbremse in einem Planetenräder-Wechselgetriebe für Kraftfahrzeuge bekannt, bei der in einem Zylinder ein doppelt wirkender Kolben angeordnet ist, dessen Kolbenstange unmittelbar auf das eine Ende einer Reibungsbremse einwirkt, deren anderes Ende an einem gehäusefesten Punkt abgestützt ist.

Bei dieser bekannten hydraulischen Servo-Vorrichtung für eine Reibungsbremse in einem Planetenräder-Wechselgetriebe für Kraftfahrzeuge ist bereits eine sogenannte Tandem-Kolbenanordnung aufgezeigt, um bei einem im Bauraum günstig unterzubringenden kleinem Kolbendurchmesser eine ausreichende Betätigungskraft für die Reibungsbremse sicherzustellen.

Die Aufgabe der Erfindung ist es, eine hydraulische Servo-Vorrichtung für eine Reibungsbremse eines Planetenräder-Wechselgetriebes für Kraftfahrzeuge, der im Oberbegriff des Patentanspruches 1 erläuterten Art derart umzugestalten, daß bei Wegfall des mit der Kolbenstange der Servo-Vorrichtung zusammenwirkenden Übersetzungshebels die ursprüngliche Funktion der Servo-Vorrichtung weitgehend beibehalten werden kann und dennoch für eine Anpassung des Planetenräder-Wechselgetriebes an drehmomentstarke Verbrennungsmotoren eine ausreichend hohe Kapazität der Servo-Vorrichtung für die Reibungsbremse zur Verfügung gestellt werden kann.

Diese Aufgabe soll hierbei sowohl für die Servo-Vorrichtung für eine erste Reibungsbremse B₁ als auch für eine zweite Reibungsbremse B₂ gelöst werden und zwar sowohl für eine Steuerung des Planetenräder-Wechselgetriebes als 4-Gang- als auch als 5-Gang-Getriebe bei im grundsätzlich gleichbleibendem mechanischen Aufbau des Planetenräder-Wechselgetriebes.

Gemäß der Erfindung wird diese Aufgabe gelöst, indem bei einer hydraulischen Servo-Vorrichtung für eine Reibungsbremse eines Planetenräder-Wechselgetriebes für Kraftfahrzeuge der im Oberbegriff des Patentanspruches 1 erläuterten Art die im Kennzeichenteil des Patentanspruches 1 aufgezeigten Maßnahmen vorgesehen werden. Diese Maßnahmen bewirken, daß unter Beibehaltung des Durchmessers der Servo-Vorrichtung durch die Tandem-Kolbenanordnung die gewünschte höhere Kapazität zur Verfügung gestellt wird. Gleichzeitig kann durch die am einen Kolben vorgesehenen unterschiedlichen Kolbenflächen A₂ und (A₁ + A₃) die synchrone 2-3-Schaltung bewerkstelligt werden.

Weitere Einzelheiten der Erfindung werden in den weiteren Ansprüchen aufgezeigt.

Die Erfindung wird anhand eines in den beiliegenden Zeichnungen gezeigten Ausführungsbeispieles näher erläutert. Es zeigt:
- Fig. 1: einen vertikalen Teilschnitt durch ein Planetenräder-Wechselgetriebe für Kraftfahrzeuge an dem die erfindungsgemäße hydraulische Servo-Vorrichtung für eine Reibungsbremse anwendbar ist;
- Fig. 2: schematische Schaubilder des Planetenräder-Wechselgetriebes mit dem hervorgehobenen Kraftfluß über die Getriebeelemente in den Gängen 1 bis 3;
- Fig. 3: einen vertikalen Schnitt durch die erfindungsgemäße hydraulische Servo-Vorrichtung für die Reibungsbremse zum Schalten des 2. Ganges in der Ausführung für maximale Drehmomentkapazität;
- Fig. 4-6: vertikale Schnitte ähnlich Fig. 3 durch weitere Ausführungen, die nicht in den Schutzbereich des Anspruchs 1 fallens;
- Fig. 7: ein Kapazitätsdiagramm mit konstanter Kapazität der Reibungsbremse B₂ und variabler Kapazität der Kupplung CL₂ durch die anpaßbare Gesamt-Kolbenfläche (A₁ + A₃) und durch Variation der Kolbenfläche A₁;
- Fig. 8: ein Kapazitätsdiagramm mit konstanter Kapazität der Kupplung CL₂ und variabler Kapazität der Reibungsbremse B₂ durch die anpaßbare Hebelübersetzung.

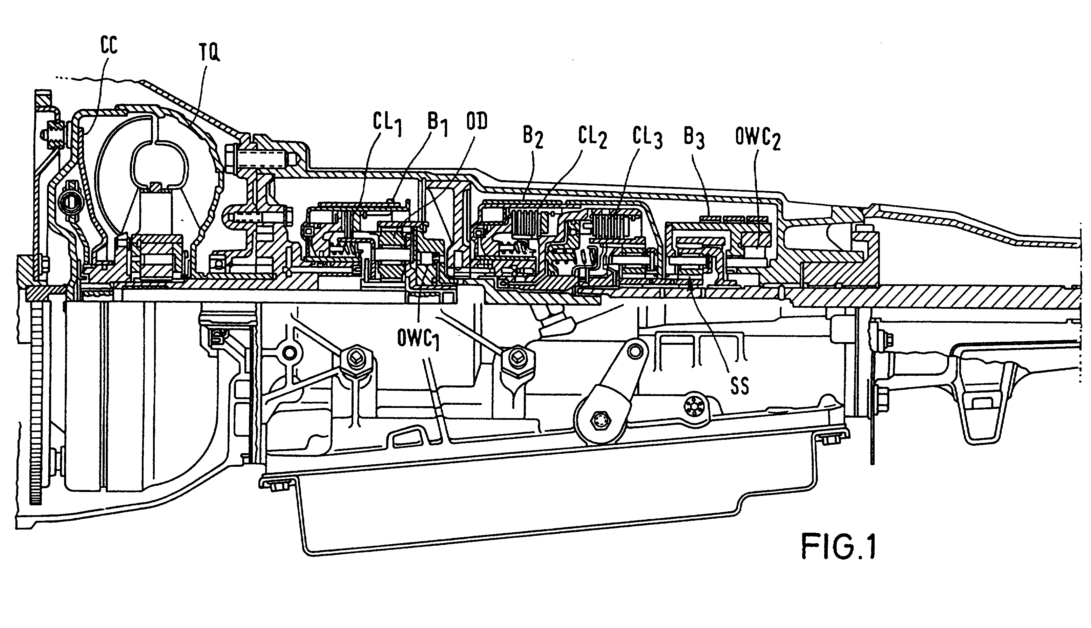

In Fig. 1 ist ein vertikaler Teilschnitt durch ein Planetenräder-Wechselgetriebe für Kraftfahrzeuge gezeigt, wie es im wesentlichen bereits in den früheren Patentschriften der Anmelderin, DE-PS 34 17 703 und DE-PS 34 17 784 in seinem mechanischen Aufbau und der dazugehörenden hydraulischen Steuerventilanordnung ausführlich und umfassend beschrieben wurde.

Dementsprechend werden in Fig. 1 nur die Hauptteile des Planetenräder-Wechselgetriebes bezeichnet, die in Zusammenhang mit der hydraulischen Servo-Vorrichtung für eine Reibungsbremse und zu deren Erläuterung erforderlich sind.

Ein hydrokinetischer Drehmomentwandler ist mit TQ und eine Wandlerüberbrückungskupplung ist mit CC bezeichnet. Ein Schnellgang oder Vorschalt-Planetenradsatz ist mit OD bezeichnet und das Hauptplanetenrädergetriebe in Form eines an sich bekannten Simpson-Planetenradsatzes ist mit SS bezeichnet. Zum Schalten des Schnellgang-Planetenradsatzes OD ist eine erste Lamellenkupplung CL₁ und eine erste Bandbremse B₁, sowie eine Überholkupplung OWC₁ vorgesehen.

Zum Schalten des Simpson-Planetenradsatzes SS ist eine zweite Lamellenkupplung CL₂, eine zweite Reibungsbremse B₂, eine dritte Lamellenkupplung CL₃ und eine dritte Reibungsbremse B₃ sowie eine zweite Überholkupplung OWC₂ vorgesehen.

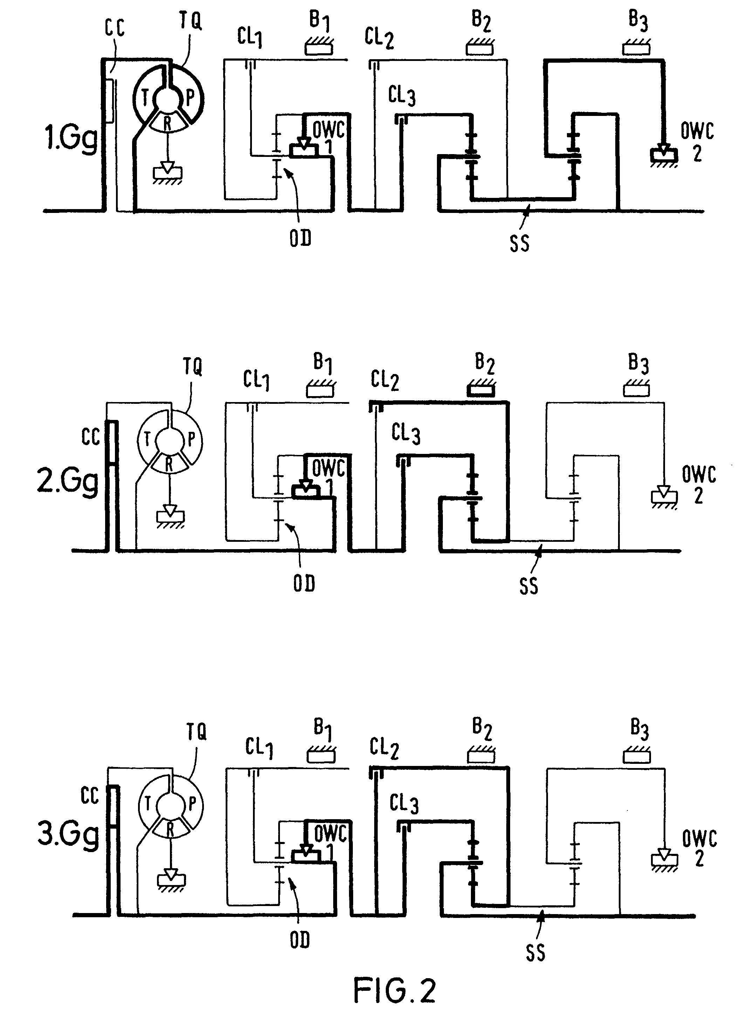

Aus Fig. 2 ist in der für einen Fachmann geläufigen Weise der Kraftfluß durch das Planetenräder-Wechselgetriebe in der Weise aufgezeigt, daß die jeweils wirksamen und betätigten Getriebeelemente mit verstärkter Strichstärke hervorgehoben sind.

Wie sich aus Fig. 2 ergibt, erfolgt die Kraftübertragung im 1. Gang über den Drehmomentwandler und die erste überholkupplung OWC₁ über die dritte Lamellenkupplung CL₃ auf das erste Ringrad des Simpson-Planetenradsatzes SS, dessen zweiter Planetenradträger über die zweite Überholkupplung OWC₂ festgelegt ist und der Abtrieb auf die Ausgangswelle erfolgt über den Planetenradträger des ersten Satzes und das Ringrad des zweiten Satzes des Simpson-Planetenradsatzes SS.

Im 2. Gang erfolgt die Drehmomentübertragung z.B. über die geschlossene Wandlerüberbrückungskupplung CC, die erste überholkupplung OWC₁ und die dritte Lamellenkupplung CL₃ wieder auf das Ringrad des ersten Satzes des Simpson-Planetenradsatzes SS und über die zweite Bremse B₂ wird das Sonnenrad des Simpson-Planetenradsatzes SS festgehalten und der Antrieb der Ausgangswelle erfolgt wieder über den Planetenradträger des ersten Satzes des Simpson-Planetenradsatzes SS.

Zur Durchführung einer Schaltung vom 2. Gang zum 3. Gang wird wieder das Drehmoment über die geschlossene Wandlerüberbrükkungskupplung CC, die Überholkupplung OWC₁ und die dritte Lamellenkupplung CL₃ auf das Ringrad des ersten Satzes des Simpson-Planetenradsatzes SS übertragen, durch Anlegen der zweiten Lamellenkupplung CL₂ und gleichzeitiges Lösen der zweiten Reibungsbremse B₂ wird jedoch die Übersetzungswirkung des ersten Satzes des Simpson-Planetenradsatzes SS unterbunden und das Drehmoment vom Planetenradträger des ersten Satzes des Simpson-Planetenradsatzes SS 1 : 1 auf die Ausgangswelle übertragen.

Eine Schaltung vom 2. Gang zum 3. Gang wird hierbei als eine sogenannte synchrone Schaltung durchgeführt, d.h., das Anlegen der zweiten Lamellenkupplung CL₂ und das Lösen der zweiten Reibungsbremse B₂ muß in einer genau abgestimmten Art und Weise erfolgen, damit eine Schaltung ohne Kraftflußunterbrechung und ohne Schaltstöße durchgeführt werden kann.

Die Drehmomentkapazität der zweiten Lamellenkupplung CL₂ muß hierbei so ausgelegt sein, daß sie im Rückwärtsgang die dann hohe Drehmomentreaktion sicher festhalten kann. Bei einer Schaltung vom 2. Gang zum 3. Gang braucht die zweite Lamellenkupplung CL₂ jedoch nur ungefähr ein Drittel des ursprünglichen Eingangsdrehmomentes zu übertragen und entsprechend ist die zweite Lamellenkupplung CL₂ für eine Schaltung vom 2. Gang zum 3. Gang eigentlich mit einer zu hohen Kapazität versehen.

Um diese mechanische Gegebenheit hydraulisch zu kompensieren ist es bereits bekannt, das Volumen der Löse-Druckkammer der zweiten Reibungsbremse B₂ während des Anlegens der zweiten Lamellenkupplung CL₂ als Akkumulator zu benutzen. Zu diesem Zweck ist der doppelt wirkende Kolben der Servo-Vorrichtung für die zweite Reibungsbremse B₂ in an sich schon bekannter Weise als Differential- oder Stufenkolben ausgebildet, der zwei unterschiedlich große Kolbenflächen A₁ und A₂ aufweist, wobei A₁ die größere Kolbenfläche an der Löse-Druckkammer und A₂ die kleinere Kolbenfläche an der Anlege-Druckkammer der Servo-Vorrichtung bilden.

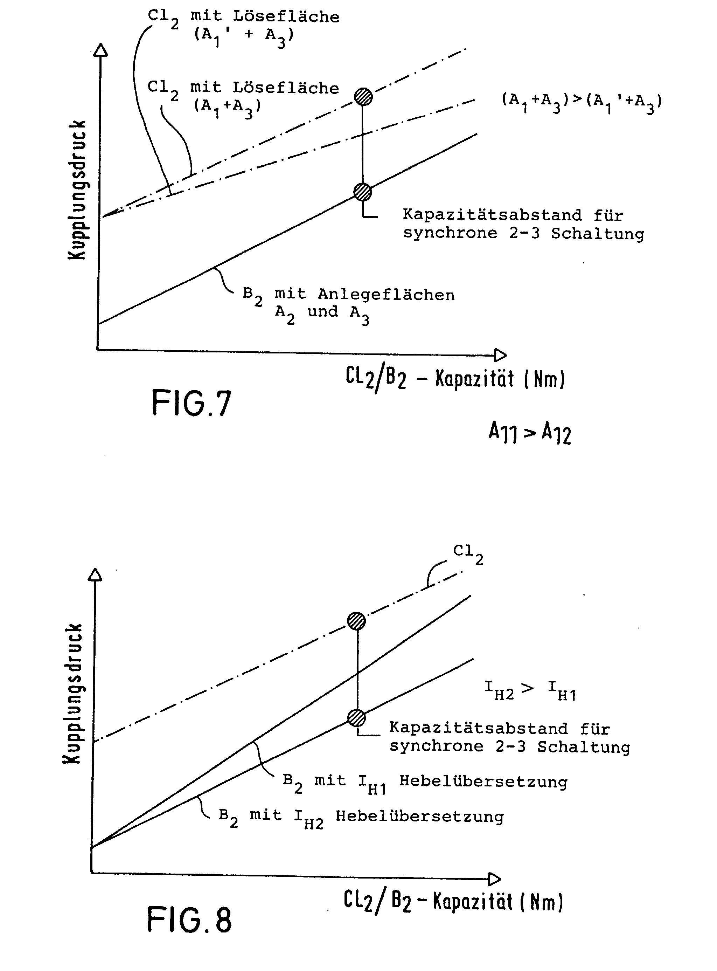

Wird eine Schaltung vom 2. Gang zum 3. Gang durchgeführt, so wird zunächst die Anlege-Druckkammer der zweiten Lamellenkupplung CL₂ mit Druckmittel beaufschlagt. Während die Lamellenkupplung CL₂ anlegt, bildet sich ein Anlegedruck aus, der sich aus der Kraft deren Rückstellfeder geteilt durch deren Kolbenfläche ergibt. Dies ist die Synchronisationsphase zwischen der Lamellenkupplung CL₂ und der Reibungsbremse B₂ und der an der Lamellenkupplung CL₂ einwirkende Leitungsdruck preßt die Reibscheiben der Lamellenkupplung aneinander und die Lamellenkupplung beginnt Drehmoment zu übertragen. Sobald durch Beginn der Drehmomentübertragung der Anlegedruck in der Lamellenkupplung CL₂ ansteigt, wird das Reaktionsdrehmoment an der Reibungsbremse B₂ verringert. Dies ergibt sich dadurch, daß die Löse-Druckkammer der Servo-Vorrichtung für die Reibungsbremse B₂ in Verbindung mit der Anlege-Druckkammer der Lamellenkupplung CL₂ steht. Je weiter der Druck in der Anlege-Druckkammer der Lamellenkupplung CL₂ ansteigt, um so höher wird der Druck in der Löse-Druckkammer an der Kolbenfläche A₁ und übersteigt schließlich die Kraft, die sich aus dem Druck in der Anlege- Druckkammer und der kleineren Kolbenfläche A₂ ergibt. Zu diesem Zeitpunkt fällt das Reaktionsmoment an der Reibungsbremse B₂ auf Null und die Lamellenkupplung CL₂ überträgt das weitere volle Drehmoment. Um diesen Synchronisationsprozeß zu verwirklichen, muß die Kapazität der Reibungsbremse B₂ unabhängig von der oben beschriebenen hydraulischen Funktion immer größer sein als die Kapazität der Kupplung CL₂. Dies wurde früher durch die variable Hebelübersetzung (siehe Fig. 8) sichergestellt.

Soweit bisher beschrieben, ist die Funktion der Schaltung vom 2. in den 3. Gang durch die früheren Patente der Anmelderin und der Anwendung an dem in Großserie gebauten automatischen Getriebe der Anmelderin bekannt.

Durch die durch Fahrzeugprogramme gewünschte Kombinationsmöglichkeit des seit vielen Jahren gebauten automatischen Getriebes mit Verbrennungsmotoren höherer Leistungsfähigkeit hat sich das Problem ergeben, daß die Drehmomentkapazität der zweiten Reibungsbremse B₂ erhöht werden mußte, was normalerweise durch eine entsprechende Veränderung an dem bisher benutzten Übersetzungshebel möglich gewesen wäre, hätten nicht Bauraumzwänge die Anwendung eines solchen Übersetzungshebels verhindert. Einer eventuellen Vergrößerung des Durchmessers der Servo-Vorrichtung standen ebenfalls Bauraumzwänge im Wege.

Die Erfinder standen nunmehr vor der Aufgabe, die höhere Kapazität der Servo-Vorrichtung für die zweite Reibungsbremse B₂ unter Wegfall des Übersetzungshebels und bei dem gegebenen Bauraum mit möglichst geringen Änderungen am bereits bestehenden Getriebegehäuse zur Verfügung zu stellen.

Wie die Erfinder diese Aufgabe gelöst haben, wird in Zusammenhang mit der Fig. 3 erläutert, die einen vertikalen Schnitt durch die neue erfindungsgemäße Servo-Vorrichtung für die zweite Reibungsbremse B₂ zeigt.

In Fig. 3 ist ein Getriebegehäuse 1 eines Planetenräder-Wechselgetriebes für Kraftfahrzeuge in einem Teilbereich geschnitten, in dem die Servo-Vorrichtung für die zweite Reibungsbremse B₂ angeordnet ist.

Im Getriebegehäuse 1 ist eine Zylinderbohrung 2 mit gestuften Abschnitten 3 und 4 von unterschiedlichen Durchmessern ausgebildet. Im Abschnitt 4 wird ein Deckel 5 der Servo-Vorrichtung eingesetzt, der in seinem Innern einen Zylinder 6 mit gestuften Abschnitten 7 und 8 bildet. Der Deckel 5 wird im Abschnitt 4 des Zylinders 2 über einen O-Ring 9 und einen Sicherungsring 10 abgedichtet und im Getriebegehäuse 1 festgelegt.

In den Abschnitten 7 und 8 des Zylinders 6 des Deckels 5 ist ein Differential- oder Stufenkolben 11 angeordnet, der mit einer Kolbenstange 12 zum Betätigen des Bremsbandes der Reibungsbremse B₂ verbunden ist und von einer Rückführfeder 13 in seine Lösestellung belastet wird.

Der Stufenkolben 11 teilt den Zylinder 6 in eine Löse-Druckkammer 14 mit einer Kolbenfläche A₁ und in eine Anlege-Druckkammer 15 mit einer kleineren Kolbenfläche A₂. Der Stufenkolben 11 ist über entsprechende Dichtungsabschnitte 16 und 17 in den jeweiligen Abschnitten 7 und 8 des Zylinders 6 abgedichtet.

Die Kolbenstange 12 ist mit einer axialen Bohrung 18 und einer Querbohrung 19 versehen, über die von einem Anlegekanal 20 Druckmittel zur Anlege-Druckkammer 15 geführt werden kann. Der Deckel 5 ist an seinem Außenumfang mit Ringnuten 21 und 22 versehen, die in Verbindung mit den weiteren Löse-Kanälen 23 und 24 stehen. Bis hierher ist der Aufbau im wesentlichen bekannt. Die erfindungsgemäßen Details werden nachfolgend erläutert.

Zwischen dem Abschnitt 3 und dem Abschnitt 4 des Zylinders 2 im Getriebegehäuse 1 wird durch den Deckel 5 eine stationäre Trennwand 25 angeordnet, durch deren Mitte sich die Kolbenstange 12 über eine Dichtung 26 erstreckt. Der nun so vom Abschnitt 4 getrennte Abschnitt 3 des Zylinders 2 wird durch einen Kolben 27, der über einen Sicherungsring 28 mit der Kolbenstange 12 fest verbunden ist und an seinem Außenumfang über eine Dichtung 29 abgedichtet ist, in zwei Druckkammern aufgeteilt, einer Löse-Druckkammer 30 und einer Anlege-Druckkammer 31.

Des weiteren ist die Trennwand 25 mit einer Dichtung 36 am Außenumfang versehen, um die Anlege-Druckkammer 31 gegen außen abzudichten. Die Stützscheibe 37 stützt die Dichtung 36 gegen den Deckel 5 ab.

Die Löse-Druckkammer 30 kann hierbei über einen Lösekanal 32 und die Anlege-Druckkammer 31 kann über eine Querbohrung 33 über den Anlegekanal 20 mit Druckmittel beaufschlagt werden.

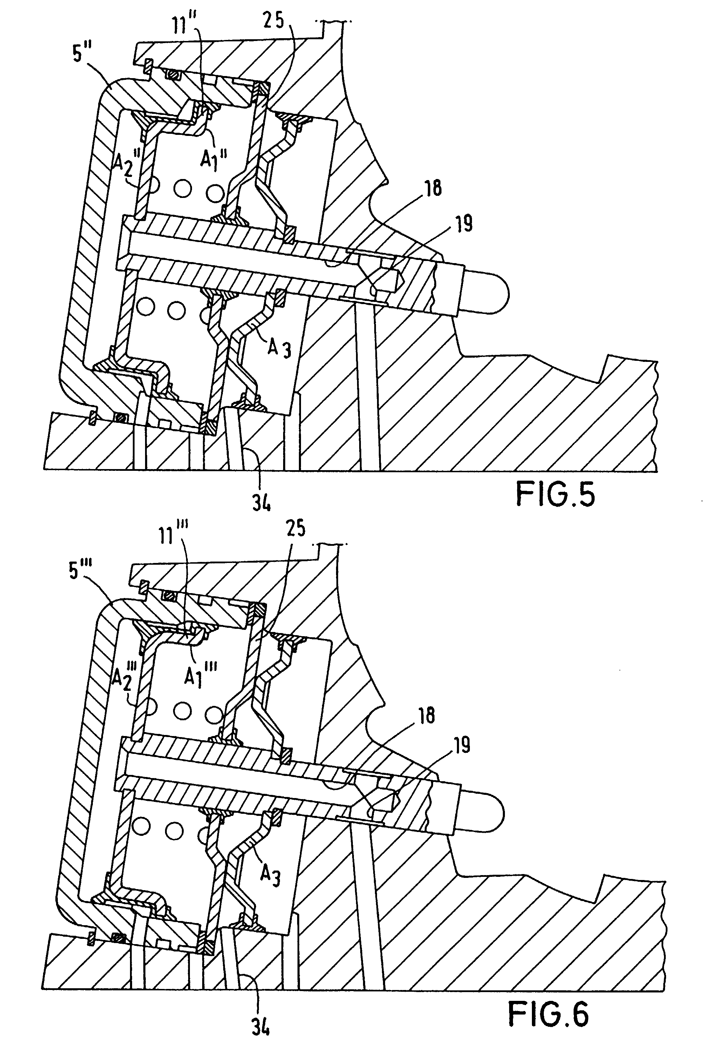

In den Figuren 4 bis 6 sind weitere Ausführungen gezeigt, in denen nur die wesentlichen, übereinstimmenden Bauteile mit mit den gleichen und abgeänderte Bauteile mit einem Strich-Index versehenen Bezugszeichen gekennzeichnet sind.

Die Figuren 4 bis 6 unterscheiden sich in erster Linie durch unterschiedliche Deckel 5', 5'' und 5''' mit deren Hilfe die für die Abstimmung der Kapazität der Reibungsbremse B₂ für den 2. Gang durch Variation der Kolbenfläche A₁ bewerkstelligt wird und die Anpassung der Kapazität der Kupplung CL₂ an die Kapazität der Reibungsbremse B₂ erforderliche Variation der Gesamt-Kolbenflächen (A₁ + A₃) durch A₁ bewerkstelligt wird.

Die Abstimmung der Gesamt-Kolbenfläche (A₁ + A₃) an deren Löseseiten in Verbindung mit der Löseseite A₁ ist für eine synchrone 2-3-Schaltung in Fig. 7 dargestellt.

Durch eine entsprechende Variation der Kolbenfläche A₁ an der Löseseite der Servo-Vorrichtung entsprechend unterschiedlicher Motor-Getriebe-Varianten und bei gleichgehaltenen Abmessungen der Getriebegehäusebohrungen kann ein bestimmter, gewünschter Abstand zwischen der Kapazität der Reibungsbremse B₂ und der Kupplung CL₂ eingestellt werden.

Hierbei gilt, je größer die Gesamt-Kolbenfläche (A₁ + A₃) zur Kolbenfläche A₂ ist, umso größer ist der Kapazitätsabstand zwischen B₂ und CL₂.

Dieser Kapazitätsabstand ist erforderlich, um bei einer synchronen 2-3-Schaltung die Kapazität der Reibungsbremse B₂ während des Synchronisationsprozeßes aufrecht erhalten zu können.

Die erfindungsgemäße Servo-Vorrichtung für eine Reibungsbremse B₂ weist den Vorteil auf, daß sie für Verbrennungsmotoren mit normaler Leistungscharakteristik verwendet werden kann, indem die stationäre Trennwand 25 und der zusätzliche Kolben 27 weggelassen wird. Soll das automatische Getriebe jedoch mit Verbrennungsmotoren mit hoher Leistung zum Einsatz kommen, so kann ohne erforderlich werdende Änderungen im Getriebegehäuse die stationäre Trennwand 25, die Stützscheibe 37 und der Kolben 27 montiert werden und die Querbohrung 33 zur Beaufschlagung der Anlege-Druckkammer 31 geöffnet werden.

Damit kann ohne Vergrößerung des Durchmessers der Servo-Vorrichtung die erwünschte höhere Drehmomentkapazität für die Reibungsbremse B₂ zur Verfügung gestellt werden.

Dadurch, daß die unterschiedlichen Deckel 5', 5'' und 5''' Zylinder 6 mit unterschiedlich gestuften Abschnitten 7 und 8 aufweisen, kann die erforderliche Anpassung der unterschiedlich großen Kolbenflächen A₁ und A₂, die für die Abstimmung der Schaltung vom 2. Gang zum 3. Gang wesentlich ist, vorgenommen werden, ohne daß hierfür eine Bearbeitung der Zylinderbohrung 2 im Getriebegehäuse erforderlich wird.

Da in den Fällen der Ausführungen Fig. 4 bis Fig, 6 eine Erhöhung der Drehmoment-Kapazität des Bremsbandes der Reibungsbremse B₂ nicht erforderlich ist, aber das zusätzliche Volumen der Löse-Druckkammer 30 des Kolbens 27 für die synchrone 2-3-Schaltung benötigt wird, ist die in Fig. 3 vorgesehene Querbohrung 33 weggelassen und die Anlege-Druckkammer 31 wird über einen Kanal 34 zum Auslaß (Ex) verbunden.

## Patentansprüche

1. Hydraulische Servo-Vorrichtung für eine Reibungsbremse (B2) eines Planetenräder-Wechselgetriebes für Kraftfahrzeuge, mit zumindest zwei Planetenradsätzen in Form eines Overdrive-Planetenradsatzes und eines Simpson-Planetenradsatzes, wobei
- Lamellenkupplungen und Reibungsbremsen über hydraulisch betätigte Servo-Vorrichtungen durch ein Steuerventilsystem in Abhängigkeit von Fahrzuständen des Kraftfahrzeuges schaltbar sind, um vier bzw. fünf Vorwärtsgänge und einen Rückwärtsgang zu schalten, und
- eine Servo-Vorrichtung einer weiteren Reibungsbremse (B₁) den Overdrive-Planetenradsatz (OD) schaltet,
- die Reibungsbremse (B₂) den Simpson-Planetenradsatz schaltet und aus einem doppelt wirkenden Kolben (11) besteht, der in einem Zylinder verschiebbar ist, wobei die Schaltung des zweiten Ganges dann erfolgt, wenn die Anlege-Druckkammern (15 und 31) an den einen Kolbenflächen beaufschlagt werden und die Löse-Druckkammern (14 und 30) an den anderen Kolbenflächen entlastet werden,
**dadurch gekennzeichnet,** daß
- der doppelt wirkende Kolben (11) in einem gestuften Zylinder (6,7,8) angeordnet ist und diesen in einer gestuften Zylinderbohrung (2) zwischen Zylinder-Abschnitten (3,4) eine stationäre Trennwand (25) nachgeordnet ist, die über eine Dichtung (36) abgedichtet und eine Stützplatte (37) festgelegt ist, wobei sich die Kolbenstange (12) über eine Dichtung (26) abgedichtet durch die Trennwand (25) erstreckt,
- im Zylinder-Abschnitt (3) ein weiterer Kolben (27) angeordnet ist, der mit der Kolbenstange (12) fest verbunden ist und der den Zylinder-Abschnitt (3) in eine Anlege-Druckkammer (31) und eine Löse-Druckkammer (30) aufteilt,
- die Anlege-Druckkammern (15 und 31) der in einer Tandemanordnung angeordneten beiden Kolben (11 und 27) über Kanäle (18 und 19) und eine Querbohrung (33) in der Kolbenstange (12) sowie über einen Anlegekanal (20) gemeinsam mit Druck beaufschlagbar sind, und
- die Löse-Druckkammern (14 bzw. 30) über getrennte Lösekanäle (24 und 32) mit Druck beaufschlagbar sind.

2. Hydraulische Servo-Vorrichtung für eine Reibungsbremse nach Anspruch 1,
**dadurch gekennzeichnet**, daß
- der gestufte Zylinder (6) für den doppelt wirkenden Kolben (11) in einem Deckel (5) der Servo-Vorrichtung ausgebildet ist, wodurch die zur Abstimmung einer Schaltung vom 2. in den 3. Gang erforderliche Anpassung der Kolbenfläche (A₁ und A₂) durch verschiedene Ausführungsformen des Deckels (5) vorgenommen werden kann.

## Claims

1. A hydraulic servo device for a friction brake B₂ of a planetary transmission for motor vehicles having at least two planetary gear sets, namely an overdrive planetary gear set and a Simpson planetary gear set, wherein
- multiplate clutches and friction brakes can be shifted by means of hydraulically actuated servos through a control valve system in dependence on driving conditions of the motor vehicle in order to shift four or five forward gears and a reverse gear and
- a servo of a further friction brake (B₁) shifts the overdrive planetary gear set (OD)
- the friction brake (B₂) shifts the Simpson planetary gear set and comprises a double-acting piston (11) which is movable in a cylinder, with the shifting of the second gear taking place if the application-pressure chambers (15 and 31) against the one piston faces are pressurised and if the release-pressure chambers (14 and 30) against the other piston faces are depressurised,
characterised in that
- the double-acting piston (11) is disposed in a stepped cylinder (6, 7, 8) and a stationary dividing wall (25) is disposed behind said piston in a stepped cylinder bore (2) between cylinder sections (3, 4), said wall being sealed by a seal (36) and retained by a supporting plate (37), with the piston rod (12) extending sealingly through the dividing wall (25) through a seal (26);
- a further piston (27), secured to the piston rod (12), is fitted in the cylinder section (3) and divides the cylinder section (3) into an application-pressure chamber (31) and a release-pressure chamber (30); and
- the application-pressure chambers (15 and 31) of the two pistons (11 and 27) arranged in tandem can be pressurised together via passages (18 and 19) and a transverse bore (33) in the piston rod (12) and through an application-passage (20) and
- the respective release-pressure chambers (14 and 30) can be pressurised through separate release passages (24 and 32).

2. A hydraulic servo device for a friction brake according to claim 1,
characterised in that
- the stepped cylinder (6) for the double-acting piston (11) is formed in a cap (5) of the servo device, whereby the adaptation of the piston areas (A₁ and A₂) necessary for tuning of a shift from 2nd into 3rd gear can be undertaken through different forms of the cap (5).

## Revendications

1. Dispositif d'asservissement hydraulique pour un frein à friction (B₂) d'une boîte de vitesses à trains planétaires pour véhicules automobiles, avec au moins deux trains planétaires sous la forme d'un train planétaire de surmultiplication et d'un train planétaire de Simpson,
- des embrayages à disques multiples et des freins à friction pouvant, au moyen de dispositifs d'asservissement à actionnement hydraulique, être enclenchés par un système de distributeur de commande en fonction d'états de marche du véhicule automobile, afin de passer quatre ou cinq vitesses avant et une vitesse arrière, et
- un dispositif d'asservissement d'un frein à friction (B₁) supplémentaire enclenchant le train planétaire de surmultiplication (OD)
- le frein à friction (B₂) enclenchant le train planétaire de Simpson et consistant en un piston (11) à double action qui peut coulisser dans un cylindre, le passage de la deuxième vitesse s'effectuant lorsque les chambres de pression d'engagement (15 et 31) sur les premières surfaces de pistons sont chargées et que les chambres de pression de désengagement (14 et 30) sur les autres surfaces de pistons sont déchargées,
**caractérisé** en ce que
- le piston (11) à double action est disposé dans un cylindre étagé (6, 7, 8), et une cloison séparatrice stationnaire (25) est disposée à la suite de ce dernier dans un perçage cylindrique étagé (2) entre des tronçons de cylindre (3, 4), cloison qui est étanchée au moyen d'un joint d'étanchéité (36) et fixée en position au moyen d'une plaque de soutien (37), la tige de piston (12) s'étendant à travers la cloison séparatrice (25) en étant étanchée au moyen d'un joint d'étanchéité (26),
- un piston supplémentaire (27) est disposé dans le tronçon de cylindre (3), piston qui est rigidement relié à la tige de piston (12) et qui divise le tronçon de cylindre (3) en une chambre de pression d'engagement (31) et une chambre de pression de désengagement (30),
- les chambres de pression d'engagement (15 et 31) des deux pistons (11 et 27) disposés en tandem peuvent être conjointement alimentées en pression par l'intermédiaire de canaux (18 et 19) et d'un perçage transversal (33) dans la tige de piston (12), ainsi que par l'intermédiaire d'un canal (20) d'engagement, et
- les chambres de pression de désengagement (14, 30) peuvent être alimentées en pression par l'intermédiaire de canaux séparés de désengagement (24 et 32).

2. Dispositif d'asservissement hydraulique pour un frein à friction selon la revendication 1, **caractérisé** en ce que le cylindre étagé (6) pour le piston (11) à double action est configuré dans un couvercle (5) du dispositif d'asservissement, de sorte que l'adaptation des surfaces de piston (A₁ et A₂) qui est nécessaire pour la synchronisation du passage de deuxième en troisième vitesse peut être entreprise par différentes formes de réalisation du couvercle (5).
